# EUROPÄISCHE PATENTSCHRIFT

(11) **EP 0 876 541 B1**
(45) Veröffentlichungstag und Bekanntmachung des Hinweises auf die Patenterteilung: **04.08.1999**
(21) Anmeldenummer: 97907008.3
(22) Anmeldetag: 22.01.1997
(51) Int. Cl.: E04G 7/30

(54) **GERÜSTKNOTEN**
SCAFFOLDING NODE
NOEUD D'ECHAFAUDAGE

(30) Priorität: 26.01.1996 DE 19602737
(43) Veröffentlichungstag der Anmeldung: 11.11.1998
(73) Patentinhaber: PERI GMBH, D-89264 Weissenhorn (DE)
(72) Erfinder: SCHWÖRER, Artur, Dipl.-Ing., D-89250 Senden (DE)
(74) Vertreter: KOHLER SCHMID + PARTNER
(86) Internationale Anmeldenummer: DE9700100
(87) Internationale Veröffentlichungsnummer: WO9727372

(56) Entgegenhaltungen:
- WO-A-88/03212
- DE-A- 3 800 169
- GB-A- 2 133 106

## Beschreibung

Die Erfindung bezieht sich auf eine Anordnung zur Bildung eines Gerüstknotens mit Querstrebe und Ständer, von dessen Außenfläche mindestens ein radial zur Ständerachse verlaufender Vorsprung absteht, der eine Aussparung aufweist, in die von oben ein am Ende der Strebe angeordneter Haken einführbar ist, und bei der an dem Strebenende ein in einem spitzen Winkel zur Ständerachse verschiebbarer Keil angeordnet ist, der nach dem Einführen des Hakens in die Aussparung unterhalb der Aussparung vom Hakenprofil so weit absteht, daß er eine Bewegung des Strebenendes nach oben durch die Aussparung hindurch sperrt (Spreizstellung).

Bei einem durch die Fig. 1 der französischen Patentschrift FR-A-2 483 994 bekannt gewordenen Gerüstknoten dieser Art ist in der Bahn des vorderen Endes des Keiles, die dieses während dem Hindurchtreten des Hakens durch die Aussparung beschreibt, keine Anschlagfläche vorhanden, auf die dieses Ende auftrifft und zu einer Bewegung relativ zu dem Haken veranlassen könnte. Er kann erst dann seine Einführstellung verlassen, wenn das untere Ende des Keils bereits unterhalb der Aussparung des Vorsprungs angelangt ist. Oft verläßt der Keil jedoch in dieser Stellung und bei nachfolgendem weiteren Einführen des Hakens in die Aussparung seine Einführstellung nicht, weil der Widerstand in der Führung, die den Keil in dem Haken führt, infolge von Verschmutzungen so hoch ist, daß der Keil nicht mehr von selbst über die Umrisse des Hakens hinaustreten kann. Dann muß diese Bewegung des Keiles in seine Spreizstellung durch einen Schlag auf das obere Ende des Keiles ausgelöst oder durchgeführt werden. Das Maß zwischen der vom Ständer abgewandten Oberfläche des zum Eintauchen in die Aussparung bestimmtenm Hakenteiles und einer zur Anlage an den Ständer bestimmten Fläche des Hakens entspricht etwa dem Abstand zwischen der dem Ständer zugewandten Stirnfläche der Aussparung in dem Vorsprung und dem Ständer, so daß einerseits das untere Keilende beim Einführen des Hakens in die Aussparung keine Auflagefläche oder Anschlagfläche findet, die den Keil beim Einführen des Hakens in die Aussparung zurückhalten würde. Andererseits ist dieser Abstand von der Ständeroberfläche kaum größer als die Breite des Hakens einschließlich des Keiles in seiner Einführstellung, so daß der Haken bereits an der Ständeroberfläche anliegen muß, wenn er in die Aussparung eintreten soll. Dies erfordert aber, daß der Haken vor dem Einführen in die Aussparung ziemlich genau über der Aussparung stehen muß, was sein Einführen in die Aussparung von dem dem Gerüstknoten abgewandten Ende der Strebe aus sehr erschwert.

Der Erfindung liegt die Aufgabe zu Grunde, den bekannten Gerüstknoten so zu verbessern, daß sein Einführen in die Aussparung und damit das Befestigen einer Strebe an einem Ständer wesentlich leichter und einfacher durchzuführen ist als bei Verwendung des bekannten Gerüstknotens.

Diese Aufgabe wird gemäß der Erfindung dadurch gelöst, daß vor dem vollständigen Einführen des Hakens in die Aussparung das untere Ende des Keiles über die Kontur des Hakens seitlich hinausragt, so daß dieses Ende beim Einführen des Hakens in die Aussparung auf einem Rand der Aussparung zur Anlage kommt und beim weiteren Einführen des Hakens hochschiebbar ist.

Die Erfindung hat den Vorteil, daß sie gegen Verschmutzungen relativ unempfindlich ist. Der Keil kann vor dem Einführen des Strebenendes in die Aussparung bereits in seiner Spreizstellung stehen, möglicherweise von einem Arbeiter in diese Lage vorgeschoben werden, so daß damit die Gleitfähigkeit des Keiles geprüft und gegebenenfalls verbessert wird. Beim Einsetzen des Hakens in die Aussparung wird dann der Keil mit einer Kraft in seine oberste Stellung zurückgeschoben, die dem Gewicht des Strebenendes entspricht. Hat das untere Keilende beim Einführen des Hakens die Stirnfläche der Aussparung passiert, so kann sich der Keil in seine untere Stellung (Spreizstellung) herabbewegen.

Die Strebe kann von ihrem dem Gerüstknoten abgewandten Ende aus von oben in die Aussparung am Ständer eingesetzt werden, wobei sich der Keil in seine das Einführen des Hakens in die Aussparung erlaubende Lage (Einführstellung) durch sein Auftreffen auf den die Aussparung umgebenden Randabschnitt des Vorsprunges bewegt. Nach Durchtritt des Hakens durch die Aussparung bewegt sich der Keil selbständig oder durch einen Druck oder Schlag auf sein oberes Ende in eine Lage, in der er so weit vom Hakenprofil absteht, daß in dieser Spreizstellung Haken und Keil bei einer Aufwärtsbewegung nicht durch die Aussparung hindurchtreten können und der Keil sich nur durch eine nur auf ihn einwirkende Kraft aus dieser Spreizstellung heraus bewegen läßt, zum Beispiel durch Hammerschlag von unten auf das untere Ende des Keiles. Durch einen Stoß von unten auf die Strebe kann der Keil nicht aus seiner Spreizstellung in seine Einführstellung zurück bewegt werden, in der er nicht mehr eine Aufwärtsbewegung sperrend vom Hakenprofil absteht und zusammen mit dem Haken durch die Aussparung nach oben hindurch- und heraustreten kann. Nur in dem Falle, in dem bei in die Aussparung eingeführtem Strebenende in der Spreizstellung des Keiles eine Kraft von unten allein auf den Keil erfolgt, kann sich der Keil relativ zum Haken bewegen und dadurch seine Spreizstellung verlassen.

Bei Ausführungsformen der Erfindung kann die Anordnung so getroffen sein, daß in der Spreizstellung dem Hochschieben des Keiles nur seine Schwerkraft und der Reibungswiderstand in dessen Führung im Haken entgegenwirkt. Oder aber tritt beim Heruntergleiten des Keiles in seine Spreizstellung zwischen zwei miteinander zusammenarbeitenden Gleitflächen eine Selbsthemmung ein, die nur durch die vorerwähnte, den Keil nach oben bewegende Kraft aufgehoben wird.

Der Winkel, um den der Keil in der Spreizstellung gegen die dem Ständer zugewandte Fläche des Hakens abgespreizt ist, also der eingangs erwähnte spitze Winkel, ist so gewählt, daß der Keil bei einer nach oben gerichteten, auf das Strebenende wirkenden Kraft von dem Rand der Aussparung bzw. ihrer Stirnfläche nicht nach oben zurückgeschoben werden kann. Dabei kann eine Selbsthemmung zwischen zwei miteinander zusammenarbeitenden Flächen von Keil und seiner Führung bzw. der Stirnfläche der Aussparung wirksam werden.

Beim Einführen des Strebenendes in die Aussparung kann nach dem Hindurchtreten des unteren Endes von Keil und Haken durch die Aussparung der Keil allein durch die Schwerkraft in seine Spreizstellung bewegbar sein, bei anderen Ausführungsformen der Erfindung kann diese Bewegung durch eine am Keil angreifende Feder unterstützt sein.

Bei einer Ausführungsform der Erfindung ist das radiale Maß der Länge der Aussparung größer als das größte radiale Maß, das der in die Aussparung eintauchbare Abschnitt des Hakens plus dem Maß ist, um das das Keilende in der obersten Stellung des Keiles seitlich über die Kontur des Hakens hinaussteht. Dadurch ist es möglich, daß das Strebenende während oder nach dem Eintauchen des Hakens in die Aussparung noch in radialer Richtung an den Ständer herangeschoben werden kann und erst während dieses Heranschiebens oder aber erst bei Anlage des Hakens an der Strebe der Keil durch die Aussparung in seine Spreizstellung hindurchgleitet, wobei wiederum diese Bewegung durch einen Schlag auf die obere Endfläche des Keiles unterstützt oder erst ausgelöst werden kann.

Bei der erfindungsgemäßen Anordnung kann der Arbeiter die Strebe zunächst mit dem Haken in die Aussparung einhängen, so daß die Strebe in dieser Stellung bereits provisorisch festgehalten ist und eventuell der Gerüstabschnitt begehbar wird, wonach dann durch Heranschieben des Strebenendes an den Ständer der Keil nach unten fällt oder durch einen Schlag auf sein oberes Ende in seine Spreizstellung geführt wird und die Strebe in dieser Stellung sichert. Außerdem hat der Haken während seinem Einführen in die Aussparung noch viel Luft, so daß sein Einführen erleichtert ist.

Bei einer Ausführungsform der Erfindung weist der Haken an seiner dem Ständer zugewandten Seite eine Fläche zur Anlage an dem Ständer auf, die zweckmäßig in Richtung der Ständerachse verläuft.

Ist das Strebenende in die Aussparung am Ständer eingeführt, so liegt bei dieser Ausführungsform der Erfindung die Stirnfläche des Strebenendes bereits an der Außenfläche des Ständers an. Durch Festklopfen des Keiles von oben legt sich die Keilfläche an dem dem Ständer abgewandten Innenrand der Aussparung an und preßt das Strebenende an den Ständer, so daß zumindest dann der Gerüstknoten die erforderliche Zug-, Druck- und Biegesteifigkeit erhält.

Der Keil kann jedoch auch auf andere Weise beweglich geführt sein, beispielsweise kann die Keilfläche auch durch einen Excenter oder dgl. gebildet werden.

Eine Selbsthemmung, die verhindert, daß der Rand der Aussparung den Keil in seine den Durchtritt durch die Aussparung erlaubende Lage zurückdrückt, kann durch Anlage von verschiedenen Flächen des Keiles an Flächen des Strebenendes verwirklicht sein. Bei einer Ausführungsform der Erfindung ist bereits eine Selbsthemmung zwischen der Fläche des Innenrandes der Aussparung und der daran anliegenden Fläche des Keiles vorgesehen. Auch kann die Selbsthemmung durch Anlage von anderen Flächen des Keiles an anderen Flächen des Strebenendes verwirklicht sein, beispielsweise durch Anlage von von dem Ständer zugewandten Flächen des Keiles an entsprechende Flächen des Strebenendes, beispielsweise auch durch Anlage von zwei im Abstand voneinander vorgesehenen Flächen, die zugleich als Führungsflächen dienen und beispielsweise beim Festschlagen des Keiles die durch den Keil erzeugte Keilkraft zwischen dem mit dem Ständer starr verbundenen Rand der Aussparung und dem Strebenende aufnehmen.

Kräfte, die von dem Rand der Aussparung beim Versuch, das Strebenende bei abgespreiztem Keil anzuheben, auf den ausgespreizten Keil ausgeübt werden, erhöhen dann den durch Selbsthemmung erzeugten Haftwiderstand, so daß keine Aufwärtsbewegung des Strebenendes möglich ist.

Bei den eine Selbsthemmung aufweisenden Ausführungsformen der Erfindung löst der Keil nicht nur die Aufgabe, das Strebenende durch Eingriff in eine Aussparung am Ständer an diesem festzukeilen, sondern darüber hinaus auch die Aufgabe, bei noch nicht festgeschlagenem Keil am Strebenende dessen Bewegung aus der Aussparung heraus zu verhindern, sofern die Selbsthemmung unabhängig vom Einschlagen des Keiles eintritt.

In der Spreizstellung ist das Maß zwischen dem vom Ständer am weitesten abgewandten Abschnitt des Randes des Keiles und dem dem Ständer zugewandten Rand des Hakens größer als das entsprechende Maß zwischen dem dem Ständer zugewandten Innenrand der Aussparung und der diese Aussparung begrenzenden, gegenüber diesem Innenrand angeordneten Fläche. Bei Ausführungsformen der Erfindung ist dieser am weitesten vom Ständer abgewandte Abschnitt des Randes des Keiles im Bereich von dessen unterem Ende vorgesehen, wobei das untere Ende zum leichteren Durchtritt durch die Aussparung etwas keilförmig zulaufend ausgebildet sein kann. Dieser in der Spreizstellung vom Ständer am weitesten entfernte Abschnitt kann bei Ausführungsformen der Erfindung auch durch einen von dem vom Ständer abgewandten Rand des Keiles abstehenden Anschlag gebildet sein, der beim Einführen des Strebenendes in die Aussparung auf einem Rand der Aussparung aufläuft und den Keil in seine den Durchtritt durch die Aussparung erlaubende Einführstellung zurückführt. Während des Absenkens des Hakens durch die Aussparung hindurch führt daher der Keil nicht nur dann, wenn sein unteres Ende auf den Rand der Aussparung auftrifft, sondern auch in dem eben geschilderten Fall eine Relativbewegung zu dem Haken in seine Einführstellung.mit einer gegenüber dem Rand der Aussparung etwa rechtwinkligen Bewegungskomponente von dem Randbereich der Aussparung in die Aussparung hinein aus.

Weitere Merkmale der Erfindung ergeben sich aus der folgenden Beschreibung von Ausführungsformen in Verbindung mit den Ansprüchen und der Zeichnung. Die einzelnen Merkmale können je für sich oder zu mehreren bei Ausführungsformen der Erfindung verwirklicht sein.

In der Zeichnung sind Ausführungsformen der Erfindung dargestellt. Es zeigen:
- Fig. 1: ein Strebenende und einen Ständerabschnitt bei einer Ausführungsform der Erfindung;
- Fig. 2: einen Längsschnitt durch eine Ausführungsform eines Strebenendes;
- Fig. 3: einen Schnitt nach der Linie III-III der Fig. 2;
- Fig. 4: eine Draufsicht auf eine Ausführungsform eines Strebenendes;
- Fig. 5: einen Schnitt entsprechend der Fig. 2 bei einer anderen Ausführungsform zusammen mit dem Ständer.
- Fig. 6: einen Schnitt entsprechend der Fig. 5 einer dritten Ausführungsform.

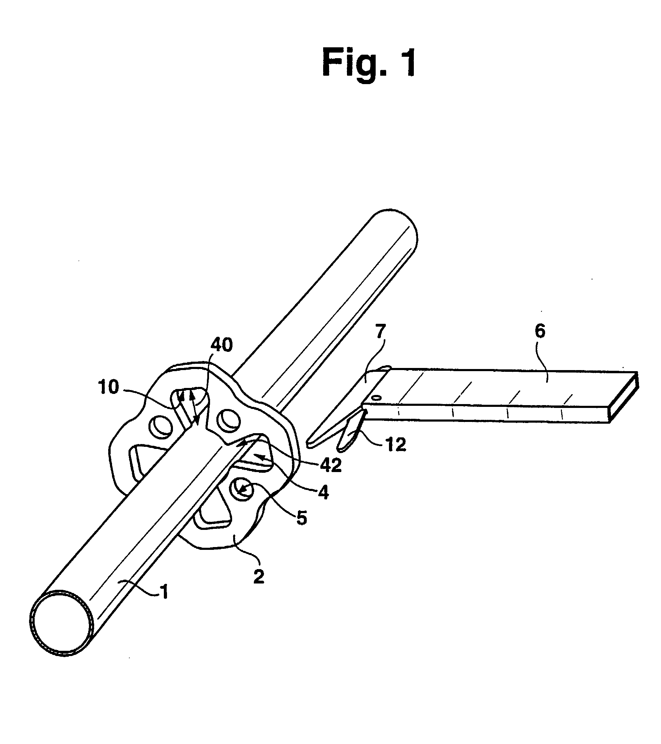

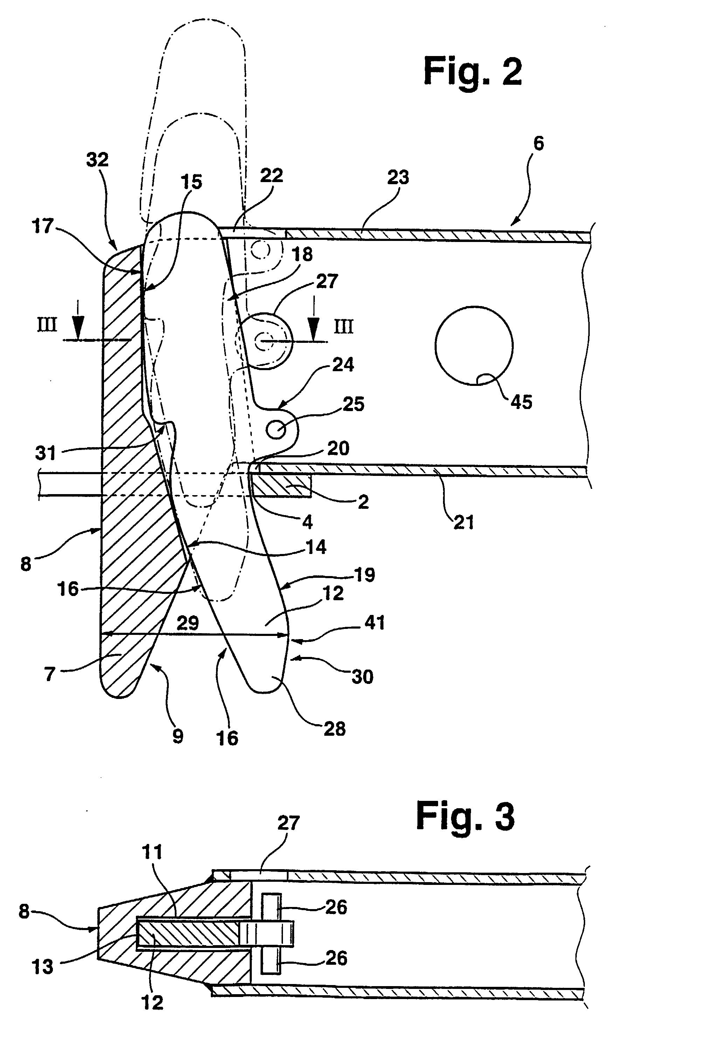

Bei der in den Fig. 1 bis 4 dargestellten Ausführungsform der Erfindung besteht ein Ständer 1 aus einem Rohr mit rundem Querschnitt, auf dem eine Rosette 2 durch Schweißpunkte 3 befestigt ist. In der Rosette sind im dargestellten Ausführungsbeispiel vier Aussparungen 4 vorgesehen, die bis an dem Umfang des Ständers 1 reichen. Außerdem können in der Rosette 2 noch Löcher 5 vorgesehen sein, die zum Befestigen von weiteren Gerüstteilen dienen können. Eine Strebe 6, die bei der dargestellten Ausführungsform aus einem hohlen runden oder Rechteckprofil besteht, verbindet im Abstand voneinander senkrecht angeordnete Ständer 1. An ihrem dem Ständer 1 zugewandten Ende ist in dem Hohlprofil ein Haken 7 befestigt, der aus einem schmiedeeisernen Stück bestehen kann. Der Haken 7 weist an seiner dem Ständer 1 zugewandten Seite eine Anlagefläche 8 auf, die zur Anlage am Umfang des Ständers 1 dient. Der Haken 7 weist eine Schräg- oder Keilfläche 9 auf seiner dem Ständer 1 abgewandten Seite auf, der das Strebenende beim Einführen des Hakens 7 von oben in eine Aussparung 4 führt. Die Fläche 9 kann so ausbildet sein, daß sie bei vollständig in der Aussparung 4 eingeführtem Haken 7 an einem Innenrand 10 einer Aussparung 4 anliegt, der an der dem Ständer 1 abgewandten Ende der Aussparung 4 vorgesehen ist. Sie kann bei vollständig in die Aussparung 4 eingeführtem Strebenende bzw. Haken 7 auch noch einen meist kleinen Abstand von dem Innenrand 10 aufweisen. Der Haken 7 ist bei der dargestellten Ausführungsform der Erfindung etwa doppelt so lang wie die Strebe 6 in Fig. 2 hoch ist, so daß die Anlagefläche 8 lang genug ist, um eine biegefeste Verbindung zwischen dem Ständer 1 und der Strebe 6 zu gewährleisten.

In dem Schmiedestück, das den Haken 7 bildet und das an das Ende des Hohlprofils der Strebe 6 angeschweißt bzw. anderweitig befestigt ist, ist eine von oben nach unten verlaufende Nut 11 ausgespart, die bei der dargestellten Ausführungsform der Erfindung in die Schrägfläche 9 etwa im Abstand vom Hakenende mündet, der etwa ein Viertel der Hakenlänge beträgt. In dieser Nut 11 ist ein Keil 12 längsverschiebbar geführt. Bei der in Fig. 2 dargestellten Ausführungsform bildet die den Grund der Nut bildende Innenstirnfläche 13 an die Keilfläche 9 anschließend eine Führungsfläche 14 und an das obere Ende der Nut anschließend eine Führungsfläche 15. Die Längsbewegung des Keiles 12 verläuft in einer Richtung, die mit der Ebene der Anlagefläche 8 einen kleinen, spitzen Winkel bildet. An den Führungsflächen 14 und 15 liegt der Keil 12 mit seiner dem Ständer 1 zugewandten Stirnfläche 16 in dessen unterem Abschnitt und mit seiner Fläche 17 in dessen oberem Abschnitt an. Durch die den Flächen 16 und 17 abgewandten Randflächen 18 und 19 ist der Keil 12 mit Abstand in einer Aussparung 20 der unteren Wand 21 der Strebe 6 bzw. in einer Aussparung 22 in einer oberen Wand 23 geführt.

An seiner dem Ständer 1 abgewandten Seite weist der Keil 12 einen Vorsprung 24 auf, der ein Auge 25 trägt, in dem ein Splint 26 lösbar befestigt ist. In den Seitenwänden der Strebe 6 befindet sich eine Öffnung 27, durch die hindurch der Splint 26 in das Auge 25 eingeführt werden kann.

Die in Fig. 2 obere Aussparung 22 ist so groß, daß der Keil 12, wenn der Splint 26 aus dem Auge 25 entfernt ist, nach oben aus der Nut 11 herausgezogen werden kann, die Länge der Aussparung ist also so groß, daß der Vorsprung 24 durch sie hindurchtreten kann.

Bei der dargestellten Ausführungsform der Erfindung ist die Aussparung 4 in Längsrichtung der Strebe 6 gesehen etwas länger als der Haken 7 an der Stelle breit ist, mit der er durch die Aussparung 4 hindurchtritt, wenn die untere Wand 21 der Strebe 6 auf der Rosette 2 aufliegt. Wird der Keil 12 bei auf der Rosette 2 aufliegender Strebe 6 nach unten gedrückt, beispielsweise mit einem Hammerschlag, so kommt seine Fläche 19 zur Anlage an den Innenrand 10 der Aussparung 4 und drückt, weil die Flächen 16 und 19 des Keiles 12 keilförmig zueinander verlaufen, über die Führungsflächen 14 und 15 die Fläche 8 an die Außenwand des Ständers 1, so daß hierdurch eine biegesteife Verbindung zwischen der Strebe 6 und dem Ständer 1 entsteht. Der Abschnitt, mit dem die Keilfläche 16 in dieser Stellung an der Führungsfläche 14 anliegt, liegt unterhalb der Ebene der Aussparung 4 der Rosette 2. Der Abschnitt 17, mit der der obere Teil des Keiles 12 an die Führungsfläche 15 angepreßt wird, liegt oberhalb der Rosette 2.

Wird das Ende der Strebe 6 von oben in die Aussparung 4 eingeführt, so tritt die Spitze des Hakens 7 in die Aussparung 4 ein und der in Spreizstellung befindliche Keil 12 ragt unten aus der Strebe 6 heraus und liegt lose in seiner durch die Nut 11 und durch die Flächen 14 und 15 bewirkten Führung. Dabei kann der Vorsprung 24 auf der Innenfläche der unteren Wand 21 der Strebe aufliegen. Die Aussparung 20 ist jedoch nicht so groß, daß der Keil nach unten aus dieser Aussparung herausfallen kann.

In dieser Spreizstellung ist das untere Ende 28 des Keiles 12 von dem Haken 7 abgespreizt. Der Abstand 29 des am weitesten von der Fläche 8 entfernten Abschnittes 41 der Seitenfläche 30 des Keiles 12 von dieser zur Anlage an den Ständer 1 bestimmten Anlagefläche 8 ist an dieser Stelle größer als die entsprechende Dimension 40 (Fig. 1) der Aussparung 4 der Rosette 2.

Wird nun das Strebenende in eine Aussparung 4 von oben eingesetzt, so tritt das untere Ende des Hakens 7 in die Aussparung 4 ein und wird dort durch die Schrägfläche 9 in die richtige Position geführt. Dabei kommt das untere Ende 28 des Keiles 12 zur Auflage an der Oberseite der Rosette 2 außerhalb der Aussparung 4, so daß der in seiner Führung bewegliche Keil 12 nach oben zurückgedrückt wird. Da diese Bewegung in einem spitzen Winkel zu der Anlagefläche 8 verläuft, verringert sich dadurch der Abstand 29 und das untere Ende 28 gelangt in den Bereich oberhalb der Aussparung 4, so daß es nicht mehr auf der Rosette aufliegt. In dieser Stellung aber kann der Keil 12 infolge seines Gewichtes oder durch Federkraft durch die Aussparung 4 hindurch nach unten gleiten, bis seine Keilfläche 19 an dem Innenrand 10 der Aussparung 4 zur Anlage kommt. Die untere Hälfte des Keiles 12 gelangt dann, wie in Fig. 2 dargestellt, in eine von dem Haken 7 abgespreizte Spreizstellung, so daß der Abstand 29 des unteren Endes 28 bzw. des Abschnitts 41 des Keiles von der Anlagefläche 8 größer ist als das entsprechende Innenmaß 40 der Aussparung 4. Dabei kommt die Keilfläche 16 an der Führungsfläche 14 sowie die Keilfläche 17 an der Führungsfläche 15 zur Anlage. Der Keilwinkel ist so gewählt, daß bereits bei dieser lediglich durch das Herabfallen des Keiles 12 gebildeten Anlage zwischen den einander gegenüberliegenden Flächen eine Selbsthemmung insoweit eintritt, daß der Innenrand 10 bei einem Anheben der Strebe 6 den Keil 12 nicht mehr relativ zu dem Haken 7 nach oben drücken kann sondern in seiner in Fig. 2 dargestellten abgespreizten Stellung verbleibt, in der das Strebenende nicht mehr durch die Aussparung 4 hindurchtreten kann, weil in dieser Stellung der Abstand 29 größer ist als das betreffende Maß 40 der Aussparung 4. Erst dann, wenn der Keil 12 mit einem Hammerschlag oder dgl. in seiner Führung nach oben geschlagen und damit die Abspreizung des unteren Teiles des Keiles von dem Haken 7 aufgehoben wird (in Fig. 2 strichpunktiert eingezeichnete Position), kann auch das Strebenende durch die Aussparung 4 wieder nach oben aus der Rosette 2 herausgenommen werden.

Der Keil 12 weist auf seiner der Anlagefläche 8 zugewandten Seite eine Nase 31 auf, die über den oberen Rand 32 des Hakens bewegt werden kann und so bei Bedarf den Keil 12 in einer oberen Stellung hält.

Die Strebe 6 kann zum Anschluß einer Diagonalstrebe noch ein Loch 45 (Fig. 2) oder einen an ihr angeschweißten Bolzen aufweisen, an dem das Ende einer Diagonalstrebe oder das Ende von zwei Diagonalstreben befestigt werden kann. Auch können zwei solcher Löcher oder Bolzen nebeneinander angeordnet sein, so daß an jedem Loch oder Bolzen das Ende einer Diagonalstrebe befestigt werden kann.

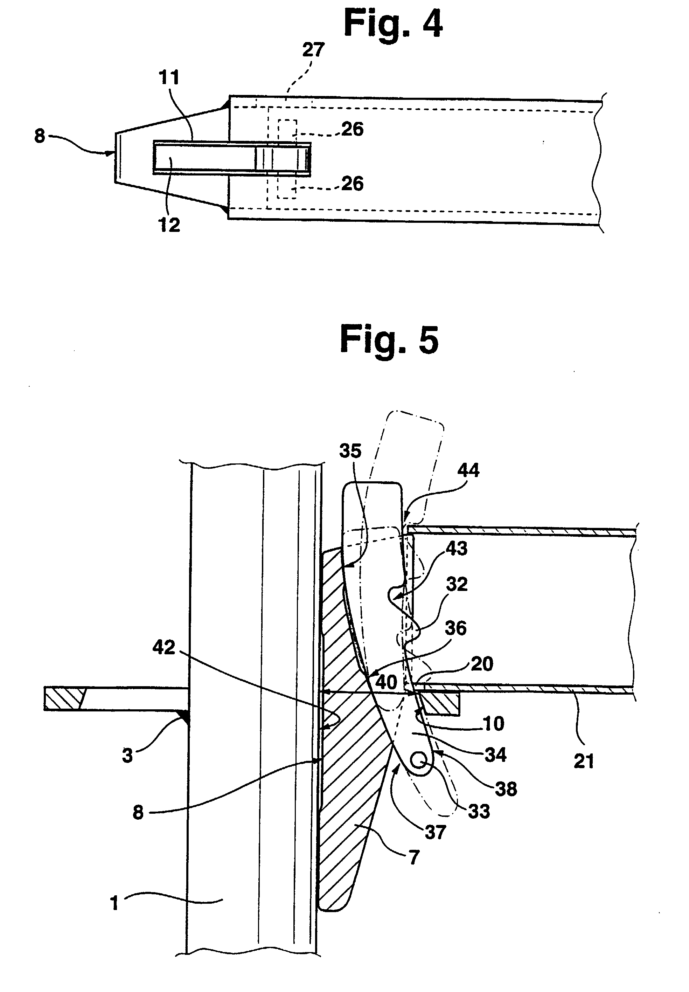

Die in Fig. 5 dargestellte Ausführungsform der Erfindung unterscheidet sich von der in den Fig. 1 bis 4 dargestellten Ausführungsform dadurch, daß der Keil 34 an seiner der Innenstirnfläche 13 der Nut 11 abgewandten Seite kein Auge 25 und an der ihr zugewandten Seite keine Nase 31 aufweist und daß die Anlagefläche 8 an ihrem oberen und unteren Ende etwas vorgezogen ist, so daß bei festgespanntem Gerüstknoten die Fläche 8 nicht auf ihrer ganzen Länge, sondern nur in einem oberen und unteren Abschnitt an der Außenfläche des Ständers 1 anliegt. Auf der der Anlagefläche 8 abgewandten Seite des Keiles 34 weist dieser eine Nase 32 auf, mit der sich der Keil 34 oberhalb der Aussparung 4 auf der Innenseite der unteren Wand 21 aufsetzen kann, weil diese wie der Vorsprung 24 bei der Ausführungsform nach Fig. 2 den Rand der unteren Aussparung 20 übergreift. Daher kann der Keil 34 nicht unten aus der Aussparung 20 herausfallen. Damit der Keil auch gegen Herausfallen durch die obere Aussparung 22 gesichert ist, weist er an seinem unteren Ende ein Auge 33 auf, in dem ein Splint 26 befestigbar ist.

Die der Anlagefläche 8 zugewandte Seitenfläche des Keiles 34 ist gebogen, was in Zusammenarbeit mit den ebenfalls etwas gebogenen Führungsflächen 35 und 36 im Grunde der Nut 11 in statischer Hinsicht sowie auch bei der Herstellung einige Vorteile bringt.

Die durch die Keilflächen 37 und 38 beim Einschlagen des des Keiles 34 erzeugte Keilkraft wird bei dieser Ausführungsform nach Fig. 5 von dem Innenrand 10 über den Keil 34 unmittelbar auf die Fläche 36 übertragen, ohne daß der Keil 34 auf Biegung beansprucht wird, weil sich die Fläche 36 bei in die Aussparung 4 eingeführtem Strebenende in der Ebene der Aussparung 4 befindet. Die Stirnfläche des Innenrandes 10 verläuft der Keilfläche 38 entsprechend schräg, so daß diese mit einer möglichst großen Fläche am Innenrand 10 anliegt.

Dabei sind bei beiden Ausführungsformen die Winkel dieser Schräge und der Verlauf der daran anliegenden Keilfläche 38 und der Winkel der Aufspreizung so gewählt, daß der Keil nicht durch den Rand 10 der Aussparung 4 zurückgeschoben werden kann und die Aufspreizung nur aufgehoben werden kann, wenn der Keil 12, 34 relativ zum Haken 7 durch eine nur auf ihn wirkende Kraft zurückgeschoben wird.

Bei der Ausführungsform der Fig. 5 weist der Keil 34 oberhalb der Nase 32 noch eine Einbuchtung 43 auf, mit der der Keil 34 in der in Fig. 5 gestrichelt dargestellten Stellung oben am Rand einer Aussparung 44 oder einer anderen Kante eingehängt werden kann, so daß der Keil 34 in seiner Einführstellung gehalten ist. Er kann dann aus dieser eingehängten Stellung durch eine gegen den Ständer 1 gerichtete Kraft so weit verschwenkt werden, daß er von dem Rand der Aussparung 44 freikommt und nach unten in seine teilweise oder vollständige Spreizstellung fällt.

Bei den dargestellten Ausführungsformen wird eine von der Strebe 6 auf den Ständer 1 ausgeübte Zugkraft von dem Haken 7 über den Keil 12, 34 auf den Innenrand 10 der mit dem Ständer 1 starr verbundenen Aussparung 4 übertragen. Eine von der Strebe 6 auf den Ständer 1 ausgeübte Druckkraft wird über die Anlagefläche 8 oder deren Teilflächen auf den Ständer übertragen. Eine auf die Strebe 6 nach oben wirkende Kraft wird in der Spreizstellung durch die Anlage des Keiles an dem Innenrand 10 der Aussparung 4 auf die Rosette 2 übertragen, da der Keil wegen seiner Schrägstellung von dem Rand der Aussparung festgehalten wird. Eine in senkrechter Richtung auf die Strebe 6 einwirkende Kraft wird durch die Auflage des Strebenendes auf der Rosette 2 auf den Ständer 1 übertragen. Diese Krafteinleitung kann dadurch noch verbessert werden, daß der als Schmiedeteil ausgebildete Haken 7 an seinen beiden Seiten je eine Wulst aufweist, die in der auf der Rosette 2 aufliegenden Stellung den seitlichen Rand der Aussparung 4 auf einer oder beiden Seiten übergreift und so eine zusätzliche Auflagefläche bildet. Ein von der Strebe 6 auf den Ständer 1 ausgeübtes Drehmoment nach oben wird durch Anlage des Keiles 12, 34 an die Stirnfläche der Nut 11 des Hakens 7 und die Anlage des Keils am Innenrand 10 der Aussparung 4 auf die Rosette 2 einerseits übertragen und andererseits durch Anlage der Anlagefläche 8 am oberen Ende des Hakens 7 an der Anlagefläche 42 (Fig. 1) des Ständers abgefangen. Ein die Strebe 6 nach unten verschwenkendes Moment wird einerseits durch die Anlage des unteren Endes des Hakens 7 an der Anlagefläche 42 des Ständers 1 und andererseits an der Anlage des Keils 12, 34 an dem Innenrand der Aussparung 4 auf die Rosette 2 übertragen, wobei der Keil über die Innenstirnfläche der Nut 11 den Haken 7 abstützt.

Bei den dargestellten Ausführungsformen der Erfindung befindet sich der am weitesten von der Fläche 8 entfernte Abschnitt 41 nahe an dem unteren Ende des Keiles 12, 34. Der Abstand 29 bestimmt die Aufspreizung und damit den Spreizwinkel und damit die Sperrwirkung des Keiles gegenüber einer Aufwärtsbewegung durch die Aussparung 4 hindurch. Ein solcher am weitesten von der Fläche 8 entfernter Abschnitt 41 kann jedoch auch noch etwas weiter oben an der Keilfläche 19 bzw. 38 vorgesehen sein. Er bildet dann an seiner Unterseite einen Anschlag, der beim Einsetzen des Hakens 7 in die Aussparung 4 am Rand der Aussparung zur Anlage kommt und den Keil in seine Einführstellung zurückführt, in der dann dieser Vorsprung 41 durch die Aussparung 4 hindurchtreten kann wonach sich der Keil 12, 34 in seine Spreizstellung bewegt, in der der Abstand des einen Vorsprung bildenden Abschnittes 41 von der Anlagefläche 8 größer ist als das Längenmaß 40 der Aussparung 4.

In den dargestellten Ausführungsbeispielen erfolgt die Aufspreizung zwischen Haken 7 und Keil 12, 34 in radialer Richtung bezüglich der Ständerachse. Diese Aufspreizung kann aber bei anderen Ausführungen in anderer Richtung erfolgen, beispielsweise quer vom Radius des Ständers. Wesentlich ist nur, daß bei der Einführung des Hakens in die Aussparung von oben das untere Keilende oder ein vom Keil abstehender Vorsprung auf den Rand der Aussparung bzw. die Oberfläche der Rosette auftrifft und daß dadurch der Keil in seine Einführstellung bewegt wird, in der er zusammen mit dem Haken durch die Aussparung 4 hindurchtreten kann.

Bei den dargestellten Ausführungsformen wird die Aussparung 4 an ihrem dem Ständer benachbarten Ende durch eine am Umfang des Ständers vorhandene Auflagefläche 42 begrenzt. Dies hat statisch und herstellungstechnisch gewisse Vorteile. Selbstverständlich kann die Aussparung 4 auf der dem Ständer 1 benachbarten Seite auch durch einen noch in der Rosette 2 verlaufenden Wandabschnitt begrenzt sein.

Bei der in Fig. 5 dargestellten Ausführungsform der Erfindung ist das Maß von der Nase 32 bis zum oberen Ende des Keiles 34 so groß, in der Stellung, in der die Nase 32 auf der Innenfläche der Wand 21 der Strebe 1 aufliegt, also in der Spreizstellung, das obere Ende des Keiles 34, wie in Fig. 5 dargestellt, entweder innerhalb der Aussparung 44 oder etwas darüber hinaus nach oben steht, so daß der Keil sich nicht in Fig. 5 im Uhrzeigersinn verschwenken kann.

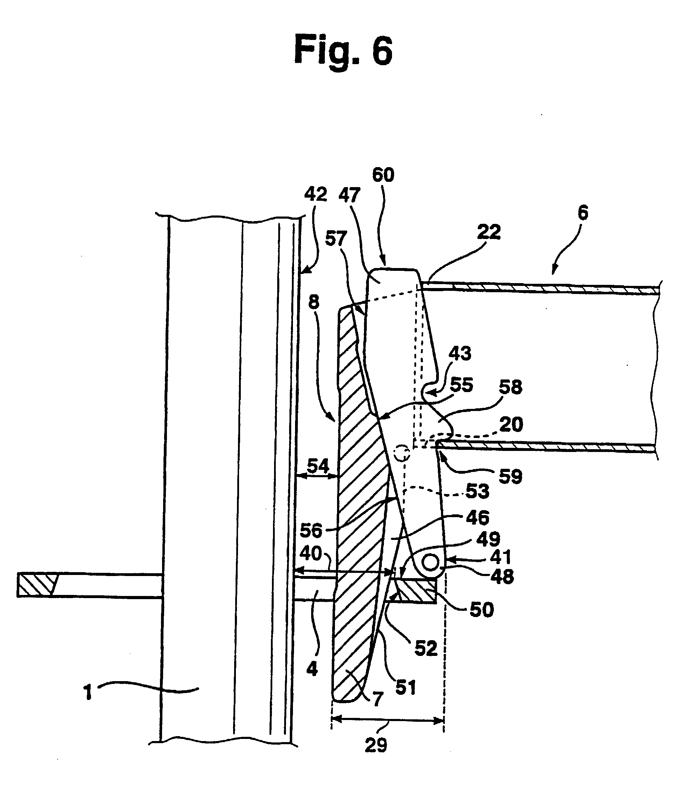

Bei der in Fig. 6 dargestellten Ausführungsform der Erfindung ist die der Nut 11 in Fig. 2 und 3 entsprechende Nut 46 so gestaltet, daß bei ganz nach oben geschobenem Keil sein unteres Ende 48 etwas aus der Nut 46 noch hinaussteht, was bei den anderen Ausführungsformen nach den Fig. 2 und 5 nicht der Fall ist. Dort verschwindet in der angehobenen Stellung (Einführstellung) das untere Keilende ganz in der Nut, die Schrägfläche 9 des Hakens liegt am Rand der Aussparung 4 an und drückt den Haken in Richtung auf den Ständer 1. In dieser Einführstellung verbleibt jedoch noch ein Spiel zwischen dem Haken 7 und den Rändern der Aussparung 4 bzw. ein Zwischenraum zwischen der Anlagefläche 42 des Ständers 1 und der Anlagefläche 8 am Haken 7. Dieses Spiel bzw. dieser Zwischenraum verschwindet, wenn der Keil 12 bzw. 34 in der Spreizstellung noch festgeklopft wird.

Bei der in Fig. 6 dargestellten Ausführungsform wird beim Einführen des Hakens 7 in die Aussparung 4 der Keil 47 in der Nut 46 des Hakens 7 zwar hochgeschoben, er verschwindet jedoch in dieser angehobenen Stellung (Einführstellung), wie oben erwähnt, nicht ganz in der Nut 46, sondern sein unteres Ende bleibt, weil es aus der Nut 46 noch etwas heraussteht, auf der oberen Fläche 49 des Randes 50 der Aussparung 4 liegen, wenn die Schrägfläche 51 des Hakens 7 noch an der Innenstirnfläche 52 der Aussparung 4 anliegt. Diese Schrägfläche 51 verläuft daher in ihrem oberen Abschnitt 53 nicht mehr keilförmig, sondern etwa parallel zu der Anlagefläche 8 des Hakens 7. In dieser Stellung, in der der Abschnitt 53 der Schrägfläche 51 an der Innenstirnfläche 52 der Aussparung 4 anliegt, besteht noch ein Zwischenraum 54, der größer ist als das Maß, um das das untere Ende 48 des Keiles 47 in dieser Stellung aus der Nut 46 vorsteht. Hierauf wird die Strebe 6 in Richtung auf den Ständer 1 geschoben, so daß das untere Ende 48 des Keiles 47 von der Oberfläche 49 des Randes 50 frei wird und über die Aussparung 4 gelangt und der Keil 47 aus dieser Stellung durch die Aussparung 4 hindurch nach unten in seine Spreizstellung fallen kann.

Die Maße können so gewählt sein, daß die Anlagefläche 8 an der Außenfläche des Ständers 1 schon zur Anlage gekommen ist, bevor das untere Ende 48 des Keiles 47 ganz in seiner Spreizstellung steht und der Keil dann noch festgeklopft wird. Die Maße können jedoch auch so gewählt werden, daß das Hindurchfallen des Keilendes 48 durch die Aussparung 4 in seine vollständige Spreizstellung schon dann erfolgt, wenn der Zwischenraum 54 durch das Heranschieben der Strebe 6 an den Ständer 1 noch nicht ganz verschwunden ist. Durch Hammerschläge auf den Haken wird das Strebenende bei der Ausführungsform nach Fig. 2 und 5 dann festgeklopft. Die Form des Keiles 47 unterscheidet sich von der Form des Keiles 12 in Fig. 2 und 34 in Fig. 5, wie aus dem Vergleich dieser Zeichnungen hervorgeht. Es ist aber auch bei der Ausführungsform nach Fig. 6 dafür gesorgt, daß in der Spreizstellung ein von der Innenfläche 52 der Aussparung 4 auf den Keil 47 ausgeübte Kraft unmittelbar auf die Innenstirnfläche 50 der Nut 46 übertragen wird.

Die dem Ständer 1 zugewandte Fläche 56 verläuft überwiegend gerade und bildet in ihrer oberen Hälfte einen Knick, an den sich wiederum eine geradlinige Fläche 57 anschließt. Auf der dem Ständer 1 abgewandten Seite weist der Keil 47 wiederum eine Nase 58 auf, die sich in Ruhestellung, also bei nicht in die Aussparung 4 eingeführten Strebenende und nicht eingeführtem Haken 7, am Rande 59 der Aussparung 20 aufsetzt und so den Keil 47 in dieser Spreizstellung daran hindert, durch die Aussparung 20 hindurchzufallen. Dabei sind die Maße so gewählt, daß in dieser Lage das obere Ende 60 des Keiles 47 aus der oberen Aussparung 22 oben herausragt.

## Patentansprüche

1. Anordnung zur Bildung eines Gerüstknotens mit Querstrebe (6) und Ständer (1), von dessen Außenfläche mindestens ein radial zur Ständerachse verlaufender Vorsprung (2) absteht, der eine Aussparung (4) aufweist, in die von oben ein am Ende der Strebe (6) angeordneter Haken (7) einführbar ist, und bei der an dem Strebenende ein in einem spitzen Winkel zur Ständerachse verschiebbarer Keil (12,34,47) angeordnet ist, der nach dem Einführen des Hakens (7) in die Aussparung (4) unterhalb der Aussparung (4) vom Hakenprofil so weit absteht, daß er eine Bewegung des Strebenendes nach oben durch die Aussparung (4) hindurch sperrt,
dadurch gekennzeichnet,
daß vor dem vollständigen Einführen des Hakens (7) in die Aussparung (4) das untere Ende (48) des Keiles (47) über die Kontur des Hakens (7) seitlich herausragt, so daß dieses Ende beim Einführen des Hakens (7) in die Aussparung (4) auf einem Rand (49) der Aussparung (4) zur Anlage kommt und beim weiteren Einführen des Hakens (7) hochschiebbar ist.

2. Anordnung nach Anspruch 1, dadurch gekennzeichnet, daß das radiale Maß (40) der Länge der Aussparung (4) größer ist als das größte radiale Maß, das der in die Aussparung (4) eintauchbare Abschnitt des Hakens (7) plus dem Maß ist, um das das Keilende (48) in der obersten Stellung des Keiles (47) seitlich über die Kontur des Hakens (7) hinaussteht.

3. Anordnung nach Anspruch 1 oder 2, dadurch gekennzeichnet, daß in der Einführstellung der Keil (47) im Strebenende gegen eine Bewegung nach unten gehalten ist.

4. Anordnung nach einem der vorhergehenden Ansprüche, dadurch gekennzeichnet, daß der Haken (7) eine mit einem Rand (52) der Aussparung (4) zusammenarbeitende Schrägfläche (51) aufweist, die beim Hindurchführen des Hakens (7) durch die Aussparung (4) das Strebenende in Richtung auf den Ständer (1) verschiebt.

5. Anordnung nach Anspruch 4, dadurch gekennzeichnet, daß ein oberer Abschnitt (53) der Schrägfläche (51) des Hakens (7) etwa parallel zu einer Anlagefläche (8) des Hakens (7) verläuft, die zur Anlage an den Ständer (1) bestimmt ist.

6. Anordnung nach einem der vorhergehenden Ansprüche, dadurch gekennzeichnet, daß der Keil (12, 34) allein durch die Schwerkraft in seine Spreizstellung bewegbar ist.

7. Anordnung nach einem der vorhergehenden Ansprüche, dadurch gekennzeichnet, daß an dem Keil eine Feder angreift, die bestrebt ist, ihn in seine Spreizstellung zu bewegen.

8. Anordnung nach einem der vorhergehenden Ansprüche, dadurch gekennzeichnet, daß der Keil (47) in seiner Spreizstellung durch Selbsthemmung zwischen zwei zusammenarbeitenden Gleitflächen gehalten ist.

9. Anordnung nach einem der vorhergehenden Ansprüche, dadurch gekennzeichnet, daß in der Spreizstellung eine Seitenfläche des Keiles (47) gegen eine Aufwärtsbewegung selbsthemmend an dem Innenrand (52) der Aussparung (4) anliegt.

10. Anordnung nach einem der vorhergehenden Ansprüche, dadurch gekennzeichnet, daß der Keil (47) zumindest in der Spreizstellung gegen eine Schwenkbewegung gesichert gehalten ist.

11. Anordnung nach einem der vorhergehenden Ansprüche, dadurch gekennzeichnet, daß der Keil (47) in einer Nut (46) eines den Haken (7) bildenden Teiles geführt ist.

12. Anordnung nach einem der vorhergehenden Ansprüche, dadurch gekennzeichnet, daß der Keil (47) in einer Nut (11) des Strebenendes geführt ist.

13. Anordnung nach einem der vorhergehenden Ansprüche, dadurch gekennzeichnet, daß der Keil (47) unverlierbar im Strebenende gehalten ist.

14. Anordnung nach einem der vorhergehenden Ansprüche, dadurch gekennzeichnet, daß die Strebe aus einem Hohlprofil besteht und der Keil mindestens einen Vorsprung aufweist, der bei einer Bewegung des Keiles relativ zu einer Aussparung in mindestens einer Wand des Hohlprofiles an deren Innenfläche zur Anlage kommt.

15. Anordnung nach einem der Ansprüche 13 oder 14, dadurch gekennzeichnet, daß der Keil innerhalb des Innenraumes des Hohlprofiles eine Aussparung aufweist, in die ein Querbolzen lösbar einsetzbar ist und daß mindestens eine Wand des Hohlprofils eine Aussparung zum Einsetzen des Querbolzens in die Aussparung des Keiles aufweist.

16. Anordnung nach einem der vorhergehenden Ansprüche, dadurch gekennzeichnet, daß der Keil in seiner Einführstellung lösbar gehalten ist.

17. Anordnung nach Anspruch 16, dadurch gekennzeichnet, daß der Keil (47) eine Einbuchtung (43) aufweist, die zum Halten des Keiles (47) in seiner angehobenen Stellung über eine Kante an der Strebe (6) bewegbar ist.

18. Anordnung nach einem der vorhergehenden Ansprüche, dadurch gekennzeichnet, daß der Keil (47) gegen ein Verschwenken in den Innenraum eines als Strebe (6) dienenden Hohlprofils gehalten ist.

## Claims

1. Assembly for the formation of a scaffold joint with transverse braces (6) and posts (1) having at least one protrusion (2) extending in a radial direction with respect to the post axis from its outer surface, the protrusion (2) having an opening (4) into which a hook (7) disposed on an end of the brace (6) can be introduced from an upward direction, and having a wedge (12,34,47) displaceable at an acute angle with respect to the post axis at the end of the brace which, below the opening (4), is sufficiently separated from the contours of the hook after introduction of the hook (7) into the opening (4) to block movement of the end of the brace in the upward direction through the opening (4), characterized in that the lower end (48) of the wedge (47) projects beyond the contours of the hook (7) in the sideward direction prior to complete introduction of the hook (7) into the opening (4) so that this end seats on an edge (49) of the opening (4) when introducing the hook (7) into the opening (4) and can be displaced upwardly when the hook is introduced further.

2. Assembly according to claim 1, characterized in that the radial dimension (40) of the length of the opening (4) is larger than the largest radial dimension exhibited by the section of the hook (7) which can be introduced into the opening (4) plus the dimension by which the end of the wedge (48) protrudes in a sideward direction beyond the contours of the hook (7) in the uppermost position of the wedge (47).

3. Assembly according to claim 1 or 2, characterized in that the wedge (47), in the introductory position, is held in the end of the brace in opposition to a downward motion.

4. Assembly according to one of the preceding claim, characterized in that the hook (7) comprises a slanted surface (51) cooperating with an edge (52) of the opening (4) which displaces the end of the brace towards the post (1) when introducing the hook (7) through the opening (4).

5. Assembly according to claim 4, characterized in that an upper section (53) of the slanted surface (51) of the hook (7) extends approximately parallel to a surface (8) of the hook (7) for seating on the post (1).

6. Assembly according to one of the preceding claims, characterized in that the wedge (12, 34) can be moved into its spread position through the force of gravity alone.

7. Assembly according to one of the preceding claims, characterized in that a spring engages the wedge which attempts to move same into its spread position.

8. Assembly according to one of the preceding claims, characterized in that the wedge is held in its spread position by a self-locking effect between two mutually cooperating sliding surfaces.

9. Assembly according to one of the preceding claims, characterized in that, in the spread position, a side surface of the wedge (47) seats on the inner edge (52) of the opening (4) in a manner which is self-locking with regard to an upward motion.

10. Assembly according to one of the preceding claims, characterized in that the wedge (47), at least in the spread position, is securely held in opposition to a pivoting motion.

11. Assembly according to one of the preceding claims, characterized in that the wedge (47) is guided within a groove (46) of a component constituting the hook (7).

12. Assembly according to one of the preceding claims, characterized in that the wedge (47) is guided in a groove (11) of the brace end.

13. Assembly according to one of the preceding claims, characterized in that the wedge (47) is held in a permanent fashion within the end of the brace.

14. Assembly according to one of the preceding claims, characterized in that the brace has a hollow section and the wedge has at least one protrusion which seats on an inner surface of a wall of the hollow section when the wedge is moved relative to an opening in at least one wall of the hollow section.

15. Assembly according to one of the claims 13 or 14, characterized in that the wedge, when within the inner volume of the hollow section, has an opening into which a transverse bolt can be introduced in a removeable fashion and at least one wall of the hollow section has an opening for introduction of the transverse bolt into the opening of the wedge.

16. Assembly according to one of the preceding claims, characterized in that the wedge is held in its introductory position in a detachable fashion.

17. Assembly according to claim 16, characterized in that the wedge (47) has a recess (43) which can be moved beyond an edge of the brace (6) to hold the wedge (47) in its raised position.

18. Assembly according to one of the preceding claims, characterized in that the wedge (47) is held to prevent it from pivoting into the inner volume of a hollow section of a brace (6).

## Revendications

1. Dispositif pour former un noeud d'échafaudage comportant une traverse (6) et un montant (1), sur la surface extérieure duquel fait saillie au moins une partie saillante (2) qui s'étend radialement par rapport à l'axe du montant et qui comporte une ouverture (4), dans laquelle un crochet (7) disposé à l'extrémité de la traverse (6) peut être introduit à partir du haut, et dans lequel sur l'extrémité du montant est disposée une clavette (12, 34, 47), qui est déplaçable selon un angle aigu par rapport à l'axe du montant et qui, après l'introduction du crochet (7) dans l'ouverture (4), fait saillie à partir du profil du crochet, au-dessous de l'ouverture (4), au point qu'elle empêche un déplacement de l'extrémité de la traverse vers le haut à travers l'ouverture (4),
caractérisé en ce
qu'avant l'introduction complète du crochet (7) dans l'ouverture (4), l'extrémité inférieure (48) de la clavette (47) fait saillie latéralement au-delà du contour du crochet (7) de sorte que lors de l'introduction du crochet (7) dans l'ouverture (4), cette extrémité vient s'appliquer sur un bord (49) de l'ouverture (4) et peut être repoussée vers le haut lors de la poursuite de l'introduction du crochet.

2. Dispositif selon la revendication 1, caractérisé en ce que la mesure radiale (40) de la longueur de l'ouverture (4) est supérieure à la dimension radiale maximale qui correspond à la partie du crochet (7), qui pénètre dans l'ouverture (4), plus la distance, sur laquelle l'extrémité (48) de la clavette fait saillie latéralement au-delà du contour du crochet (7), lorsque la clavette (47) est dans la position la plus haute.

3. Dispositif selon la revendication 1 ou 2, caractérisé en ce que dans la position introduite, la clavette (47) est retenue dans l'extrémité de la traverse à l'encontre d'un déplacement descendant.

4. Dispositif selon l'une des revendications précédentes, caractérisé en ce que le crochet (7) comporte une surface oblique (51), qui coopère avec un bord (52) de l'ouverture (4) et qui, lors du passage du crochet (7) à travers l'ouverture (4), déplace l'extrémité de la traverse en direction du montant (1).

5. Dispositif selon la revendication 4, caractérisé en ce qu'une partie supérieure (53) de la surface oblique (54) du crochet (7) s'étend approximativement parallèlement à une surface d'application (8) du crochet (7), qui est destinée à l'appliquer contre le montant (1).

6. Dispositif selon l'une des revendications précédentes, caractérisé en ce que la clavette (12, 34) peut être déplacée uniquement sous l'action de la pesanteur pour venir dans sa position écartée.

7. Dispositif selon l'une des revendications précédentes, caractérisé en ce qu'à la clavette est accroché un ressort qui tend à ramener la clavette dans sa position écartée.

8. Dispositif selon l'une des revendications précédentes, caractérisé en ce que la clavette (47) est maintenue dans sa position écartée par auto-blocage entre deux surfaces de glissement coopérantes.

9. Dispositif selon l'une des revendications précédentes, caractérisé en ce que dans la position écartée, une surface latérale de la clavette (47) s'applique, de manière à réaliser un auto-blocage à l'encontre d'un déplacement ascendant, contre le bord intérieur (52) de l'ouverture (4).

10. Dispositif selon l'une des revendications précédentes, caractérisé en ce que la clavette (47) est retenue au moins dans la position écartée, de manière à être bloquée contre un mouvement de pivotement.

11. Dispositif selon l'une des revendications précédentes, caractérisé en ce que la clavette (47) est guidée dans une rainure (46) d'une partie formant crochet (16).

12. Dispositif selon l'une des revendications précédentes, caractérisé en ce que la clavette (47) est guidée dans une rainure (11) de l'extrémité de la traverse.

13. Dispositif selon l'une des revendications précédentes, caractérisé en ce que la clavette (47) est retenue d'une manière imperdable dans l'extrémité de la traverse.

14. Dispositif selon l'une des revendications précédentes, caractérisé en ce que la traverse est constituée par un profilé creux et que la clavette possède au moins une partie saillante, qui, lors du déplacement de la clavette par rapport à une ouverture située dans au moins une paroi du profilé creux, vient s'appliquer contre la surface interne de ce profilé.

15. Dispositif selon l'une des revendications 13 ou 14, caractérisé en ce que la clavette possède, à l'intérieur de l'espace intérieur du profilé creux, une ouverture, dans laquelle un boulon transversal peut être inséré de façon amovible, et qu'au moins une paroi du profilé creux comporte une ouverture pour l'insertion du boulon transversal dans l'ouverture de la clavette.

16. Dispositif selon l'une des revendications précédentes, caractérisé en ce que la clavette est retenue de façon amovible dans sa position introduite.

17. Dispositif selon la revendication 16, caractérisé en ce que la clavette (47) possède une ouverture (43), qui est déplaçable au-dessus d'un bord de la traverse (6), pour le maintien de la clavette (47) dans sa position soulevée.

18. Dispositif selon l'une des revendications précédentes, caractérisé en ce que la clavette (47) est bloquée à l'encontre d'un pivotement dans l'espace intérieur d'un profilé creux utilisé comme traverse (6).
